# EUROPEAN PATENT SPECIFICATION

(11) **EP 2 660 990 B1**
(45) Date of publication and mention of the grant of the patent: **10.09.2014**
(21) Application number: 12166696.0
(22) Date of filing: 03.05.2012
(51) Int. Cl.: H04B 3/54, H04L 25/02

(54) **Asymmetric full duplex communication with high tolerance for coax characteristic impedance**
Asymmetrische Vollduplex-Kommunikation mit hoher Toleranz für die Merkmalimpedanz des Coaxiakabels
Communication duplex asymétrique avec haute tolérance à l'impédance caractéristique des câble coaxiaux

(43) Date of publication of application: 06.11.2013
(73) Proprietor: EqcoLogic N.V., 1040 Brussel (BE)
(72) Inventor: Kuijk, Maarten, 2018 Antwerpen (BE); Devuyst, Bram, 1501 Buizingen (BE)
(74) Representative: Hertoghe, Kris Angèle Louisa

(56) References cited:
- EP-A1- 2 247 047

## Description

### Field of the invention

The present invention relates to transceivers for full-duplex bidirectional communication with high bitrate communication (270 Mbps or more) in one direction, low bitrate communication (at least 3 times lower than the high bitrate) in the opposite direction and device power communication in both directions over a single ended transmission medium utilizing a common path for both transmission and reception, whereby low frequency components of the high bitrate data that are coinciding with the signal spectrum of the low bitrate communication are suppressed making the system tolerant for characteristic impedance variations of the single ended medium.

### Background of the invention

US patent US7330703B2 shows splitter circuits for having bidirectional communication using frequency division multiplexed transmission based on passive filtering using magnitudes of impedances without explaining how to achieve device power communication over the transmission medium and without teaching how to achieve this in a way that the transmission line is terminated at the ends, which is of importance for avoidance of transmission line reflections.

US patent US6426970B1 shows an active bidirectional splitter for communication over a common coaxial cable and also many other prior art circuits using transformers and chokes. It does not show how to get enough splitter separation or how to integrate a cable equalizer or how to work without these magnetic elements that have limited high frequency performance. Neither does it show how an active splitter can be made that allows to have high bitrate data reception combined with low bitrate data transmission, and having at the same time device power communicated to or from the splitter.

US patent application US2010043045A1 shows how to do full duplex communication with a high bitrate in one direction and a low bitrate in the other direction, making use of two hybrid circuits for splitting the low and the high bitrates.

Patent application EP2247047 shows how to do full duplex communication with a high bitrate in one direction and a low bitrate in the other direction, without needing hybrids for splitting the low and the high bitrates, further also providing means for device power communication.

### Summary of the invention

It is an object of the present invention to provide transceivers for full-duplex bidirectional communication with high bitrate communication (270 Mbps or more) in one direction and low bitrate communication (at least 3 times lower than the high bitrate) in the opposite direction over a single ended transmission medium utilizing a common path for both transmission and reception. It is an advantage of embodiments of the present invention that device power can be communicated in both directions over the single ended transmission medium. It is a further advantage of embodiments of the present invention that the system is made tolerant for characteristic impedance variations of the single ended medium.

This objective is reached by devices according to embodiments of the present invention.

In one aspect, the present invention provides an active transceiver circuit for transmission of a high bitrate data signal over and reception of a low bitrate data signal from a single ended transmission medium utilizing a common path for both transmission and reception. The single ended transmission medium comprises an inner conductor and a conductive shield layer. The transceiver circuit comprises
an input port for receiving a high bitrate input data signal,
an output port for delivering a low bitrate output data signal,
a differential input/output port for launching a high bitrate data signal into the single ended transmission medium and for receiving a low bitrate data signal from the single ended transmission medium,
a differential output driver for receiving the high bitrate input data signal and transmitting this signal to the differential input/output port (403), the latter port having an impedance connected over it that has a first impedance value at frequencies of the frequency range of the low bitrate data signal, and a higher impedance value for higher frequencies.

In embodiments of the present invention, the impedance may be implemented as an inductance. In other embodiments of the present invention, the impedance may be implemented as a ferrite bead. In embodiments of the present invention, the impedance may include a series resistor.

### Brief description of the drawings

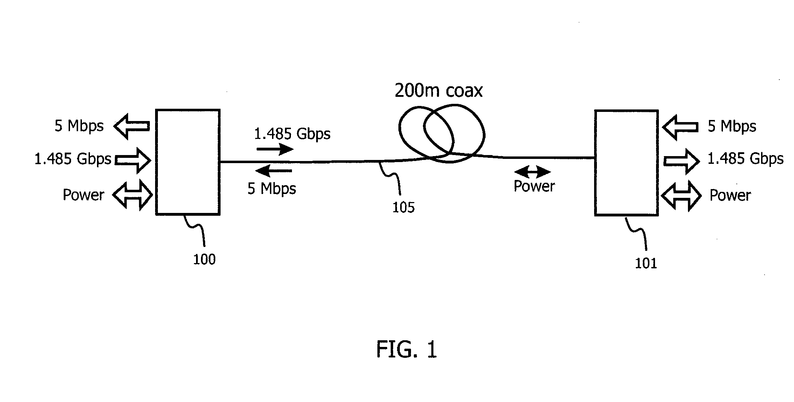

FIG. 1 illustrates a communication system according to an embodiment of the present invention, including a single ended transmission medium utilizing a common path for both transmission and reception, with two transceivers having high bitrate communication in one direction, low bitrate communication in the opposite direction and power communicated over the transmission medium.

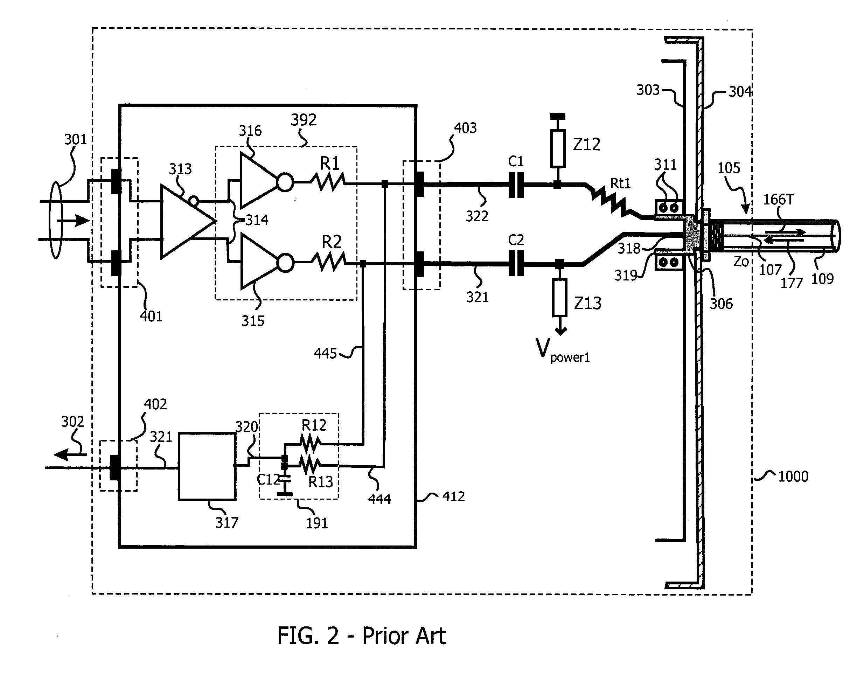

FIG. 2 illustrates a prior art active transceiver circuit whereby low bitrate data is received and restored, high bitrate data is transmitted and device power is communicated over a transmission medium.

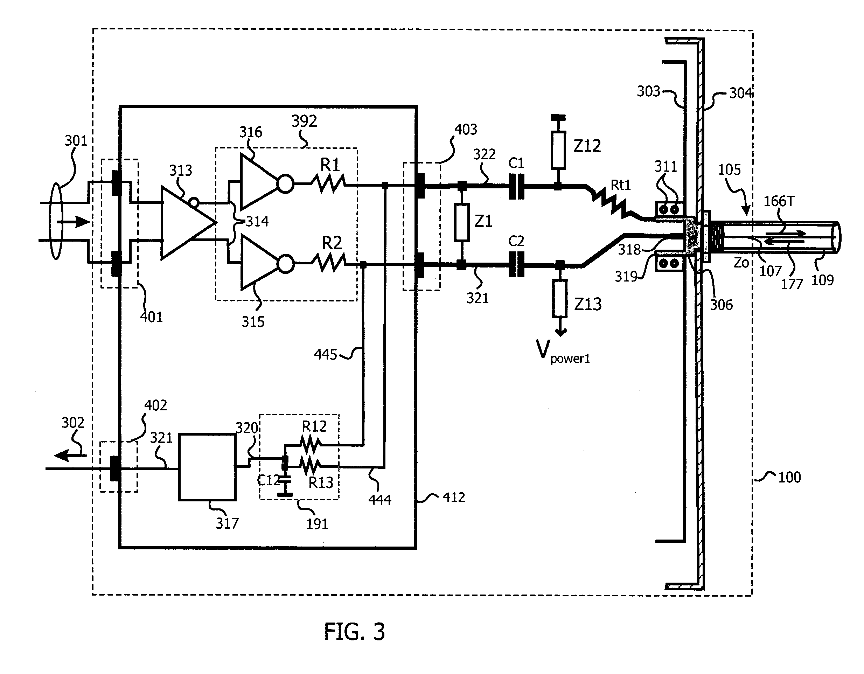

FIG. 3 illustrates an active transceiver circuit according to an embodiment of the present invention whereby low bitrate data is received and restored, high bitrate data is transmitted and device power is communicated over a transmission medium using an additional impedance Z1 for achieving high mismatch tolerance.

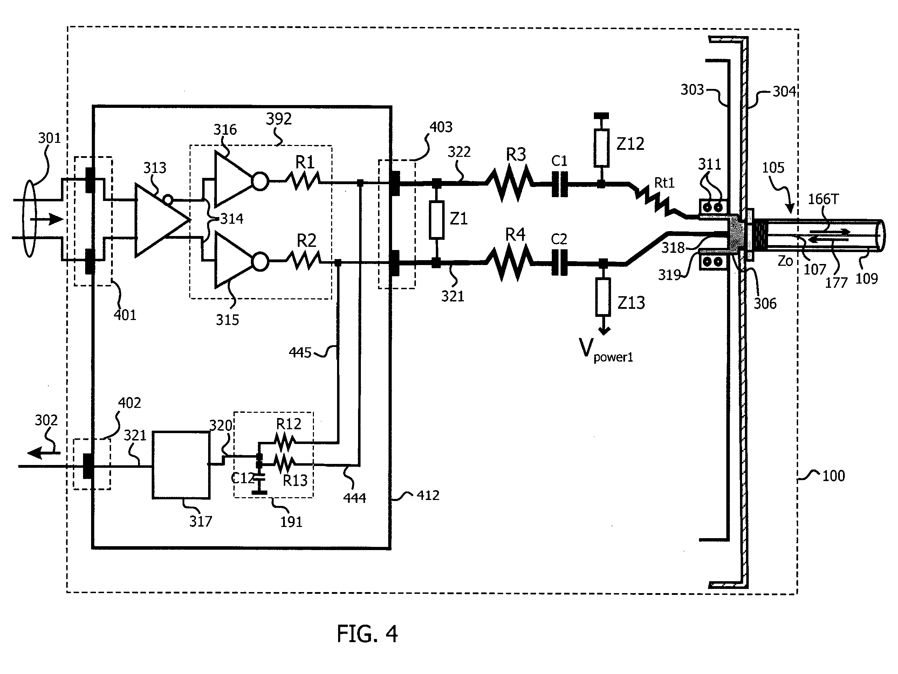

FIG. 4 illustrates an alternative active transceiver circuit according to a further embodiment of the present invention whereby low bitrate data is received and restored, high bitrate data is transmitted and device power is communicated over a transmission medium using an additional impedance Z1 for achieving high mismatch tolerance.

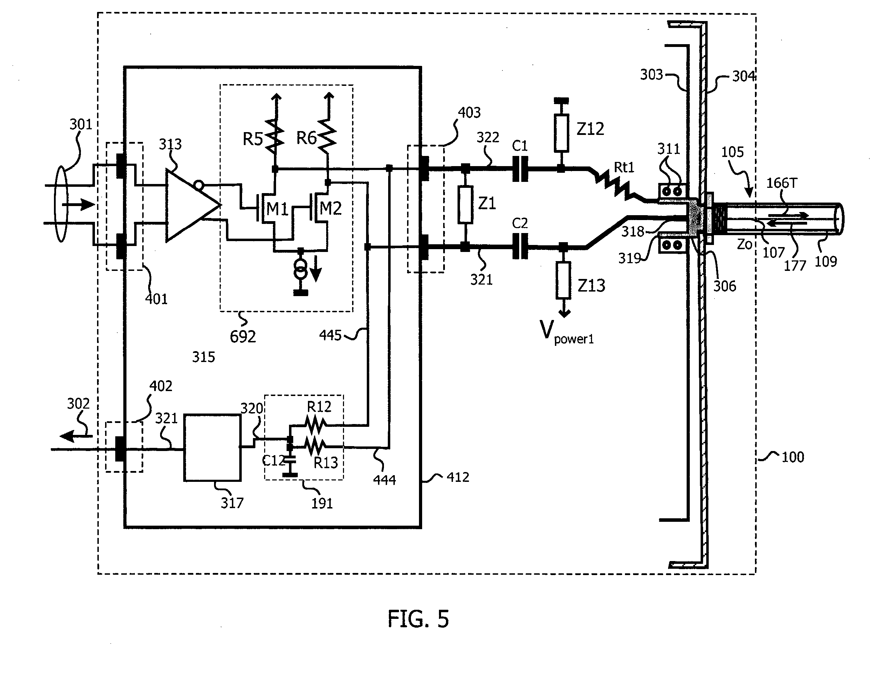

FIG. 5 illustrates an alternative active transceiver circuit according to a further embodiment of the present invention whereby low bitrate data is received and restored, high bitrate data is transmitted and device power is communicated over a transmission medium using an additional impedance Z1 for achieving high mismatch tolerance, whereby the internal cable driver is of the CML-variant.

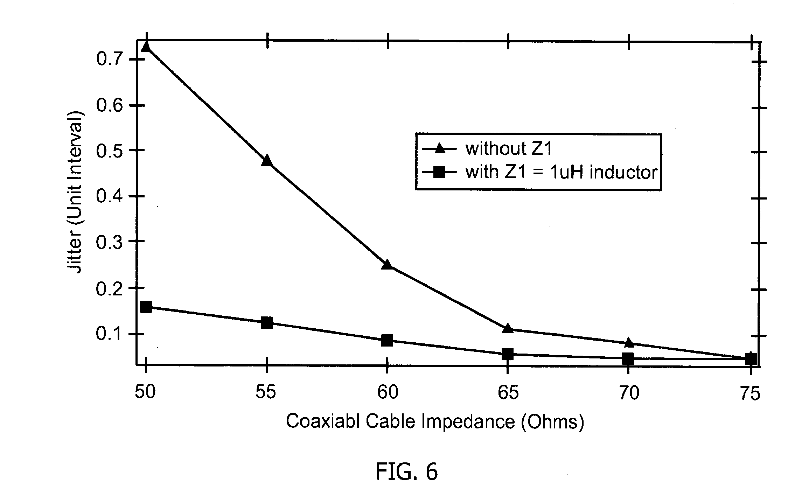

FIG.6 illustrates jitter in function of coaxial cable impedance for an active transceiver circuit according to an embodiment of the present invention.

In the different figures, the same reference signs refer to the same or analogous elements.

### Detailed description of illustrative embodiments

The present invention will now be described with respect to particular embodiments and with reference to certain drawings, but the invention is not limited thereto, but is only limited by the claims. The drawings described are only schematic and are non-limiting. In the drawings, the size of some of the elements may be exaggerated and not drawn on scale for illustrative purposes. The dimensions and relative dimensions do not necessarily correspond to actual reductions to practice of the invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention as defined by the appended claims.

In a typical bidirectional communication system, a transmitter and a receiver operate simultaneously and at the same or at a different frequency for sending and receiving signals, respectively, over a common single ended transmission medium utilizing a common path for both transmission and reception, e.g. a coaxial or non-coaxial cable. The present invention relates to transceivers for coupling a transmitter, a receiver and power to a single ended transmission medium. Signals are differentiated by the direction in which the respective signals are travelling and by their relative bitrates: in one direction a high bitrate data signal is propagating, whilst in the opposite direction a low bitrate data signal is propagating.

A first bidirectional transceiver 100 in FIG. 1 couples a first transmitter and a first receiver to a common transmission medium 105 at one end, and a second bidirectional transceiver 101 couples a second transmitter and a second receiver to the common transmission medium 105 at the other end.

In patent application EP2247047 good examples of transceivers 100 and 101 have been disclosed. Transceiver 100 transmitting a high bitrate data signal to the common transmission medium 105 and receiving a low bitrate data signal from the common transmission medium 105 is the subject of the present invention to provide an improvement in the specific use case that there is an overlap between the signal spectrum of the transmitted high bitrate data signal and the signal spectrum of the low bitrate data signal. This can for example be the case when bit scrambling has been applied on the high bitrate data signal without being followed by a coding that DC-balances the data (like for instance 8B/10B coding). For example this is the case in the SMPTE (Society of Motion Picture and Television Engineers) signalling standard for digital video broadcast. The so-called pathological pattern signals generate very low frequency components in the signal spectrum, overlapping the signal spectrum of low bit rate data signal of e.g. 5 Mbps.

A prior art transceiver 1000 as illustrated in FIG. 2 can handle this; however, it is requiring a good matching between the characteristic impedance Zo of the single ended medium 105 and the termination resistor Rt1. With Rt1 being for example 75Ω +/-1 Ω, and the characteristic impedance Z₀ of the single ended medium 105 being 75Ω +/-4 Ω, prior art transceiver 1000 will operate well.

However, in some places, such as in Asia for instance, a lot of legacy cabling has entirely non-standard impedance (e.g. neither 50 Ω nor 75 Ω , but somewhere in the middle), e.g. 62 Ω, giving too much of an imbalance and hence too much cross-talk from the high bitrate data signal on the low bitrate data signal causing bit errors in the received low bitrate data.

To overcome this problem, embodiments of the present invention provide an active transceiver circuit 100 for transmission of a high bitrate data signal 166T over and reception of a low bitrate data signal 177 from a single ended transmission medium 105 comprising an inner conductor 107 and a conductive shield layer 109 and utilizing a common path for both transmission and reception, the bitrate of the low bitrate data signal being at least 3 times lower than the bitrate of the high bitrate data signal. The active transceiver circuit 100 according to embodiments of the present invention comprises:
an input port 401 for receiving the high bitrate input data signal 301,
an output port 402 for delivering the low bitrate output data signal 302,
a differential input/output port 403 for launching the high bitrate data signal 166T into the single ended transmission medium 105 and for receiving the low bitrate data signal 177 from the single ended transmission medium 105,
a differential output driver 392 for receiving the high bitrate input data signal 301 and transmitting this signal to the differential input/output port 403.
In embodiments of the present invention, the differential input/output port 403 has an impedance Z1 connected over it that has a variable impedance which is lower at the frequency range of the low bitrate data signal and higher at frequencies of the frequency range of the high bitrate data signal.

In embodiments of the present invention, transceiver 100 is further adapted, by provision of dedicated elements (see further) such as impedances Z12, Z13, a signal restore circuit 317, for communicating device power over the transmission medium 105 in a way that the communication is preserved, so that very low final bit error rate is achieved in both directions. In embodiments of the present invention, the direction of device power communication can be fixed in one direction, or fixed in the other direction, or can be chosen freely depending on circumstances and/or needs of particular devices coupled to the transmission medium 105.

The operation of the transceiver circuit 100 according to embodiments of the present invention is demonstrated hereinbelow for digital signalling, for the sake of keeping the explanations simple. Multiple level signalling and analogue signalling can benefit from the present invention in the same way using same or similar measures. Moreover, the operation of the transceiver circuits 100, 101 is illustrated for driving a coaxial cable as a common single ended transmission medium. However, the invention is not limited thereto; also non-coaxial cables may be used. In preferred embodiments, the single ended transmission medium is a shielded transmission medium, which reduces EMI radiation.

Implementation of the proposed circuits can be in many types of chip technology, including CMOS, BICMOS, Bipolar, SiGe, even by using discrete components. Indicated grouping of parts of the circuits may help for suggesting which parts can be arranged on a same chip, however, it should not be limited thereto.

FIG. 1 shows a basic setup of a communication system according to embodiments of the present invention. A bidirectional transceiver 100, 101 is connected to an opposite extremity of a length of transmission medium, e.g. 200 m of coaxial cable 105 as illustrated in FIG. 1.

In a first direction (right to left in the drawings illustrated), transceiver 101 couples a low bitrate data signal (bitrate at least 3 times lower than the high bitrate, e.g. low bitrate 5 Mbps) to a common transmission medium, e.g. coaxial cable 105, and sends it to a second transceiver 100 at the other end (near end) of the common transmission medium 105.

In a second direction (left to right in the drawings illustrated), the second transceiver 100 at the near end of the common transmission medium 105 couples a high bitrate data signal (bitrate 270 Mbps or higher, e.g. 3 Gbps) to the common transmission medium, e.g. coaxial cable 105, and sends it to the first transceiver 101 at the other end, e.g. the far end of the common transmission medium 105.

In any direction, device power may be simultaneously communicated over the transmission medium 105.

In a particular set-up (not illustrated in detail in the drawings), the first transceiver 101 is part of a frame grabber, and the second transceiver 100 is integrated in a camera device, and the device power communicated is in the right to left direction, i.e. from the frame grabber to the camera device. The camera is powered through the transmission medium 105 by the frame grabber.

In another particular set-up (not illustrated in detail in the drawings), the first transceiver 101 is part of a display device, like an LCD monitor, and the second transceiver 100 is integrated in a personal computer (PC), and the device power communicated is in the left to right direction, i.e. from the PC to the monitor. The monitor is powered through the transmission medium 105 by the PC, thus eliminating part or whole of the elsewise required power supply connection between the monitor and the main power supply.

Other particular set-ups(not illustrated in detail in the drawings) may require power communication direction to switch from time to time, or from situation to situation, depending on circumstances. For example, a personal computer (PC) connected at one end of a transmission medium 105 can be a battery powered lap-top, that may be powered by a monitor that itself is connected to the mains power supply, besides being connected to the other end of the transmission medium 105. The monitor can thus provide power to operate the laptop, and to charge its batteries. At another moment in time the laptop has enough power to drive a monitor (the same or another one) that is not connected to the mains. This powering of the monitor then may happen through the same transmission medium 105 but now in the opposite direction, while simultaneously driving high bitrate data from the PC to the monitor to display data, e.g. a movie.

The proposed system according to embodiments of the present invention allows DC currents to be communicated at a current level of at least 1 amperes, delivering at a voltage level of e.g. 24 V, the respectable power level of 24 Watt. With some expected voltage drop over the transmission medium 105, 20 Watt could still be remaining as device power, which is sufficient for many types of cameras and monitors to get powered and/or charged.

As an example it is further assumed, for the ease of explanation only, that the high bitrate data signal is 1.485 Gbps, and the low bit rat data signal is at 5 Mbps, both in the non-return-to-zero (NRZ) format. Other bitrates can be used for the high bitrate data signals (bitrate 270 Mbps or higher) and the low bitrate data signals (bitrate less than a third of the high bitrate), as well as other coding formats including NRZI coding.

FIG. 2 illustrates a prior art transceiver 1000 without the improvement of the present invention. Such transceiver 1000 is described in detail in EP2247047.

FIG. 3 illustrates a transceiver 100 of an embodiment of the present invention for receiving the low bitrate data signal 177 from the single ended transmission medium 105, transmitting a high bitrate data signal 301 over the single ended transmission medium 105 and communicating device power.

The transceiver 100 comprises a transceiver circuit 412 having a differential input port 401 for receiving a high bitrate data signal, a unidirectional output port 402 for outputting a low bitrate data signal, a common input/output port 403 and coupling circuitry for coupling the signals from the common input/output port 403 to the transmission medium 105 and vice versa.

In transceiver 100, the low bitrate signal 177 that comes from the transmission medium 105 and that has to be recovered is not likely to need an equalizing function, since for the given length and bitrate of the transmission medium, e.g. coaxial cable 105, not much frequency dependent losses are to be expected. Nevertheless, in embodiments of the present invention, an equalizer may be provided in the transceiver 100 to correct for frequency dependent losses due to the transmission medium 105.

A high bitrate differential data signal 301 is delivered to differential input port 401 of the transceiver circuit 412, and is being received by pre-driver 313, that on its turn drives a differential driver 392 through a differential signal on differential node 314. Differential driver 392 is exemplified in FIG. 3 by two inverters 315, 316 and termination resistors R1 and R2 driving a first and second transmission line 321 and 322 in an antagonistic, complementary way. This is not intended to be limiting the present invention; the differential driver 392 can have any suitable implementation. The first and second transmission lines 321 and 322 start at the differential bidirectional port 403 and both continue up to a connector 306, e.g. coax connector, connecting to the single transmission medium, e.g. the coaxial cable 105.

The first and second transmission lines 321, 322 are connected by means of a connector, e.g. a coax connector 306, to the transmission medium, e.g. coaxial cable 105, with the aforementioned characteristic impedance Zo. The coax connector 306 has a central pin 318 for connecting to the inner conductor 107 of the coaxial cable 105, and one or more shielding pins 319 for connecting to the conductive shield layer 109 of the coaxial cable 105. In the embodiment illustrated in FIG. 3, the first transmission line 321 is connected to the central pin 318 of the coax connector 106. The second transmission line 322 is connected to the shielding pins 319 of the coax connector 306. The second transmission line 322 is terminated, e.g. close to the connector, e.g. coax connector 306, with a termination resistor Rt1, either to a power plane that is also connected to the one or more shielding pins 319 of the coax connector 306, or as shown in FIG. 3, directly to the one or more shielding pins 319 of coax connector 306. Resistor Rt1 has an impedance that matches closely the characteristic impedance Zo of coaxial cable 105. In this way, second transmission line 322 is source- and end-terminated by source termination resistor R1 and end termination resistor Rt2, respectively. First transmission line 321 is source terminated by source termination resistor R2 and continues as a transmission line through coaxial cable 105, assuming to be terminated at the near end of the coaxial cable 105 in the transceiver 101(not illustrated). The one or more shielding pins 319 of the coax connector 306 are preferably also connected to a power plane, preferably the GND power plane, e.g. in a PCB 303, for example though VlAs 311. In the embodiment illustrated, the coaxial cable 105 is attached by means of the coax connector 306 onto a PCB 303. For good performance of the system, it is advantageous that the coax connector 306 is connected in a low inductive way with the main ground plane in the PCB 303. Therefore a set of vias (two vias 311 are indicated, but more may be used) may be provided at the footprint of the coax connector 306 for good connection. Further, a casing 304 of the system is preferably also connected intimately to the coax connector 306, e.g. through a nut that screws the coax connector 306 against the casing 304, or through any other conductive clamping means including e.g. a conductive gasket.

Transmission lines 321 and 322 can generate AC coupling, e.g. by having capacitors C2 and C1 in their path, either somewhere in the middle (as shown in FIG. 3), i.e. somewhere between source and end termination, or between terminated transmission lines themselves and the differential driver 392 (not shown).

Differential output driver 392 is designed to generate primarily complementary signals at the start of transmission lines 321 and 322, i.e. with a differential mode signal and small common mode signal. In that way, taking the average voltage of both outputs of the differential driver 392 on nodes 444 and 445, will give little time dependent variation due to edges in the outbound signal, i.e. due to switching or antagonistic maximum slew rates on nodes 444 and 445. However, it is impossible to realize that the differential driver 392 at high bitrate becomes fully complementary, i.e. without any common mode components, in all transistor corners and at all temperatures. Also an imbalance at the level of the connector 306, or a mismatch between the termination resistor Rt2 and the characteristic impedance Zo of the coaxial cable 105 will generate a high speed average voltage component. Therefore, an averaging circuit 191 is provided which, besides taking the average between the voltages on nodes 444 and 445, also provides a low pass filtering action, after which its output signal is sent to a signal restore circuit 317. This can be achieved by coupling each of the nodes 444, 445 to a common node 320 over an impedance R12, R13, respectively, the resistors R12 and R13 having same value. At the common node 320, a capacitor C12 is introduced, making from R12 and R13 as well a low pass filter construction. In an alternative embodiment, not illustrated, two capacitors can be introduced, equal in capacitance value, so as to make from R12 and a first one of the capacitors a first low pass filter, and from R13 and a second one of the capacitors a second low pass filter. In this way, by providing a low-pass filter construction, the cross-talk stemming from the outbound signal is filtered out. The -3 dB point of the low pass filter(s) should be low enough to reduce the high frequency components by at least a factor 20, but it should be at a sufficient high frequency so that the edges from the incoming low bitrate signal 177 are not filtered out. The latter signal will travel mainly through the first transmission line 321 and terminate in resistor R2, thus being fully visible on node 445. Node 444 will essentially not change level due to the incoming low bitrate data signal 177, since this signal will not pass over transmission line 322.

The low bitrate signal 177 will be received in a reduced form at node 320, for example reduced by a factor 2 since averaging circuit 191 may be taking the average between the voltages on nodes 444 and 445.

Assuming that in transceiver 101, the low bitrate signal 101 was launched with a suggested amplitude of 150 mV, the amplitude at the input of the signal restore circuit 317 then has to start with the low signal amplitude of less than 75 mV, as also losses in the transmission medium 105 appear. From the original low bitrate signal 101, at least the edge positions are remaining.

In the particular case whereby the high bitrate signal has very little DC-balance, it is possible to have signal frequency components that coincide with the frequency band of the low bitrate signal, or that is close to it, or even below. With e.g. SMPTE standard signals used in video broadcast, for the high bitrate signals, one uses scrambling without measures for DC-balancing the signal. This can give for example 19 HIGH followed by 1 LOW and this sequence may be repeated for several video lines (tens of microseconds). The prior art receiver of FIG. 2 can handle this, assuming that the matching of components is obtained. However, the characteristic impedance Zo of the single ended transmission medium 105, is unknown for some legacy cabling installations. Instead of being 75Ω, as expected for video installations, it can as well be 62Ω. Of course, the 75Ω termination resistor Rt1 could in this case be replaced by a 62Ω resistor, which is unfortunately not a general solution to the problem. When this matching is wrong, the transmitted low frequency component in the high-bitrate signal is converted from a differential signal into a common mode signal that is picked up by the receiver 317. It is not averaged out by the inherent low pass filtering of the averaging circuit 191, since it is in the frequency band of the low bitrate signal. In other words, it is seen as crosstalk.

Knowing that the low frequency signal component in the high bitrate signal can be restored in the far end receiver 101, it can be allowed to avoid transmitting these components in the first place or at least reducing them strongly. Their reflections will then be much smaller, and their cross-talk effect will be significantly reduced.

To achieve this in an easy cheap way it is therefore proposed in accordance with embodiments of the present invention to add impedance Z1 between the output nodes of the differential driver 392. In the embodiments illustrated in FIG. 3, the added impedance Z1 is drawn outside transceiver circuit 412 since it is assumed to comprise one or more discrete components. In its simplest form, Z1 may bean inductor. For the purpose of the example, the value of the inductor may be in the 1 to 4 µH range. When a strong DC signal is present (e.g. a long time HIGH), the inductor will start conducting and pulling its connected complementary node 322 and 321 towards each other, in that way effectively ending the DC signal that was imposed by the differential driver. The impedance Z1 needs to have in other words a low impedance value for signals in the frequency band of the low bitrate signals, and increasingly higher for higher frequencies such that most of the high bitrate signal still gets transmitted. By placing the impedance Z1 between the complementary outputs of the driver 392, it can be proven that low bit rate signal 177 still comes in with the same amplitude, to be received and restored by receiver 317, just as it would without impedance Z1. Impedance Z1, in its simplest form being an inductor does not need to match any other component, so its value can be chosen with a 10-20% level of precision, as is often the case for inductors. In some cases it is even possible to use a ferrite bead, of which the inductance portion is more or less of the same value as the calculated preferred inductor value. Using a ferrite bead has several advantages: it is cheaper than an inductor, and above all it may have less parasitic capacitance between its two pins which will less interfere with the high bitrate signal at the 01010 transitions.

A small down-side of the additional impedance Z1 is that the return-loss of transceiver 100 seen at the connector 306 at frequencies in the range of the low bitrate signal, may no longer be ideal. In other words, a small part of the signal 177 may get reflected. To optimize this, the impedance Z1 can have an additional component, e.g. a resistor (of e.g. 25 to 150 Ω) in series, trading off the allowed characteristic impedance mismatch improvement with the maximum allowed reflection. A second way of achieving the same goal, however, with less down-side is to use a split source termination as demonstrated in FIG.4. R1 and R2 can be e.g. 50Ω, and R3 and R4 can each be 25Ω, together delivering a total 75Ω as source termination for both complementary outputs. It now looks as if Z1 is in-between the source terminations, still short-circuiting DC outgoing signals, but causing less reflection for the incoming signal 177.

FIG. 5 shows the same improvement in case one prefers to make a circuit based on a differential CML (current mode logic) driver 692, having a differential pair M1 and M2, generating two complementary output signals on transmission lines 322 an 321.

FIG. 6 shows the simulated jitter with a 100 m coaxial cable length where the transmit voltage of the low bit rate signal was 150 mV at transceiver 101, and whereby PRBS7 data was transmitted at 5 Mbps. At transceiver 100, high bitrate data was transmitted of the SDI-type at 270 Mbps with a transmit amplitude of 800 mV, having pathologic patterns generating a large DC unbalance. Two cases are shown, the result of the prior art receiver, and the result when using transceiver of FIG. 4, where R1 and R2 are 50Ω, and R3 and R4 are 25Ω. Z1 is hereby a single inductor of 1-uH. It is clearly seen that the second solution can handle much better the DC unbalance in case of a variable transmission medium impedance, since much less jitter is seen at the output of receiver 317.

The improvement is also useful for another possible imbalance: For the power communication it can be enough to only provide Z13, without its balancing counterpart Z12. At least in simulations, it can be seen that Z1 has also a reducing effect on the output jitter of 317, when not populating Z12. Z13 and Z12 may include large inductors, so leaving out one of them makes the total PCB consumed area smaller.

In Patent application EP2247047, an example of a signal restore circuit 317 is provided. It illustrates well how the original low bitrate signal can be retrieved.

In Patent application EP2247047, considerations about how to communicate the power have been provided using Z13 onto transmission line 322 and with possibly Z12, between ground and transmission lines 321.

The foregoing description details certain embodiments of the invention. It will be appreciated, however, that no matter how detailed the foregoing appears in text, the invention may be practiced in many ways. It should be noted that the use of particular terminology when describing certain features or aspects of the invention should not be taken to imply that the terminology is being re-defined herein to be restricted to include any specific characteristics of the features or aspects of the invention with which that terminology is associated.

## Claims

1. An active transceiver circuit (412) for transmission of a high bitrate data signal (166T) over and reception of a low bitrate data signal (177) from a single ended transmission medium (105) utilizing a common path for both transmission and reception, the single ended transmission medium (105) comprising an inner conductor (107) and a conductive shield layer (109),
the transceiver circuit (412) comprising
an input port (401) for receiving a high bitrate input data signal (301),
an output port (402) for delivering a low bitrate output data signal (302),
a differential input/output port (403) for launching a high bitrate data signal (166T) into the single ended transmission medium (105) and for receiving a low bitrate data signal (177) from the single ended transmission medium (105),
a differential output driver (392) for receiving the high bitrate input data signal (301) and transmitting this signal to the differential input/output port (403), **characterized by** the latter port having an impedance (Z1) connected over it that has a first impedance value at frequencies of the frequency range of the low bitrate data signal, and a higher impedance value for higher frequencies.

2. An active transceiver circuit (412) according to claim 1, wherein the impedance (Z1) includes an inductor.

3. An active transceiver circuit (412) according to any of the previous claims, wherein the impedance (Z1) includes a ferrite bead.

4. An active transceiver circuit (412) according to any of claims 2 or 3, wherein the impedance (Z1) includes a series resistor.

## Patentansprüche

1. Aktive Sender-/Empfängerschaltung (412) zur Übertragung eines hohe Bitrate aufweisenden Datensignals (166T) über ein einpoliges Übertragungsmedium (105) beziehungsweise Empfang eines niedrige Bitrate aufweisenden Datensignals (177) aus diesem unter Verwendung eines gemeinsamen Pfads sowohl für Sendung als auch Empfang, wobei das einpolige Übertragungsmedium (105) einen inneren Leiter (107) und eine leitfähige Abschirmschicht (109) umfasst,
wobei die Sender-/Empfängerschaltung (412) Folgendes umfasst:
einen Eingangsport (401) zum Empfangen eines hohe Bitrate aufweisenden Eingangsdatensignals (301),
einen Ausgangsport (402) zum Abliefern eines niedrige Bitrate aufweisenden Ausgangsdatensignals (302),
einen Differenz-Eingangs-/-Ausgangsport (403) zum Einspeisen eines hohe Bitrate aufweisenden Datensignals (166T) in das einpolige Übertragungsmedium (105) und zum Empfangen eines niedrige Bitrate aufweisenden Datensignals (177) aus dem einpoligen Übertragungsmedium (105),
einen Differenz-Ausgangstreiber (392) zum Empfangen des hohe Bitrate aufweisenden Eingangsdatensignals (301) und Senden dieses Signals zu dem Differenz-Eingangs-/-Ausgangsport (403), **dadurch gekennzeichnet, dass** der letzere Port eine über ihn geschaltete Impedanz (Z1) aufweist, die bei Frequenzen des Frequenzbereichs des niedrige Bitrate aufweisenden Datensignals einen ersten Impedanzwert und für höhere Frequenzen einen höheren Impedanzwert aufweist.

2. Aktive Sender-/Empfängerschaltung (412) nach Anspruch 1, wobei die Impedanz (Z1) eine Induktivität umfasst.

3. Aktive Sender-/Empfängerschaltung (412) nach einem der vorhergehenden Ansprüche, wobei die Impedanz (Z1) eine Ferritperle umfasst.

4. Aktive Sender-/Empfängerschaltung (412) nach einem der Ansprüche 2 oder 3, wobei die Impedanz (Z1) einen Reihenwiderstand umfasst.

## Revendications

1. Un circuit d'émetteur-récepteur actif (412) pour la transmission d'un signal de données à débit binaire élevé (166T) et la réception d'un signal de données à faible débit binaire (177) provenant d'un support de transmission à extrémité unique (105) au moyen d'un trajet commun pour à la fois la transmission et la réception, le support de transmission à extrémité unique (105) comprenant un conducteur interne (107) et une couche de protection conductrice (109),
le circuit d'émetteur-récepteur (412) comprenant un port d'entrée (401) pour la réception d'un signal de données en entrée à débit binaire élevé (301),
un port de sortie (402) pour la fourniture d'un signal de données en sortie à faible débit binaire (302),
un port d'entrée/sortie différentiel (403) destiné à l'envoi d'un signal de données à débit binaire élevé (166T) vers le support de transmission à extrémité unique (105) et à la réception d'un signal de données à faible débit binaire (177) provenant du support de transmission à extrémité unique (105),
un pilote de sortie différentiel (392) destiné à la réception du signal de données en entrée à débit binaire élevé (301) et à la transmission de ce signal vers le port d'entrée/sortie différentiel (403), **caractérisé en ce que** ledit port possède une impédance (Z1) raccordée sur celui-ci qui possède une première valeur d'impédance à des fréquences de la plage de fréquences du signal de données à faible débit binaire, et une valeur d'impédance plus élevée pour des fréquences plus élevées.

2. Un circuit d'émetteur-récepteur actif (412) selon la Revendication 1, où l'impédance (Z1) comprend un inducteur.

3. Un circuit d'émetteur-récepteur actif (412) selon l'une quelconque des Revendications précédentes, où l'impédance (Z1) comprend une perle en ferrite.

4. Un circuit d'émetteur-récepteur actif (412) selon l'une quelconque des Revendications 2 ou 3, où l'impédance (Z1) comprend une résistance en série.
